# EUROPEAN PATENT SPECIFICATION

(11) **EP 1 638 389 B1**
(45) Date of publication and mention of the grant of the patent: **15.08.2007**
(21) Application number: 04734022.9
(22) Date of filing: 19.05.2004
(51) Int. Cl.: A01J 5/007

(54) **REMOTE CONTROL**
FERNBEDIENUNG
TELECOMMANDE

(30) Priority: 30.06.2003 SE 0301933
(43) Date of publication of application: 29.03.2006
(73) Proprietor: DeLaval Holding AB, 147 21 Tumba (SE)
(72) Inventor: ERIKSSON, Jan, S-147 63 Uttran (SE); SJÖLUND, Martin, S-147 71 Grödinge (SE)
(74) Representative: Kossmann, Jan Henrik
(86) International application number: PCT/SE2004/000773
(87) International publication number: WO 2005/000009

(56) References cited:
- EP-A1- 1 212 938
- EP-A2- 1 212 936
- WO-A1-99/30277
- WO-A1-99/51083
- WO-A2-01/97556
- US-A1- 2002 124 803

## Description

### Field of the invention

The invention relates to a method and system for remote supervision of automatic milking systems and/or animals of the kind defined in the preambles of claims 1 and 11, respectively.

### Background of the invention

Milking related processes of today are more or less automated, whereby the milking of animals may be performed by means of automatic milking systems (AMS), i.e. systems in which teat cups are automatically attached to the teats of the animal. However, this automatization requires supervision and a farmer needs, for example, to make sure that nothing happens to the animals and that the milking operations run smoothly. It would be an expensive solution to have a person on duty supervising the AMS and the animals at all times, and this is thus not feasible.

An automatic milking station includes, among other things, a milking robot and one or more computer(s), controlling the processes performed by the milking station. The automatic milking station can thus be manoeuvred by means of the at least one computer, and data concerning for example the milking processes can be shown on a screen. The screen may be a touch sensitive screen by means of which data and/or commands may be entered in order to manoeuvre the milking station. The AMS includes, in most cases, also at least another computer, located in the vicinity of the milking station. This computer preferably includes (or is connected to) a database containing information about the herd, specifying for example milking logs, ratios of fodder etc. This computer, if present, may be connected, by means of a modem or Ethernet or the like, to yet another computer located e.g. conveniently in the farmer's house. This system provides means for the farmer to see the same data in the house as if he was in the stable building. However, a farmer is thus dependent on the computer located in the farmer's house, and has to have access to it. If he is working in the fields or travelling about he probably has no means to access the computer located in his house. Further, he has no means to correct errors that have occurred, but has to go to the stable building in order to take care of a failure.

There are means for alerting a farmer by means of an e-mail or an SMS (Short Message Services) to a cellular phone or a PDA (Personal Digital Assistant) belonging to the user. However, these devices are limited to receiving at rather low data rates (e.g. 9,6 kb/s), and it is realised that the alarm can only inform the user that a failure has occurred and no details about the failure. He has no means to attend to a failure, but has to contact a service provider who can solve the problem or he has to go to the stable building himself.

Another option to alert a farmer according to the state of the art is to have the computer that is connected to the milking station call a predetermined telephone, whereby a synthetic voice informs the farmer that a failure has occurred. Again, this solution does not provide means for correcting the failure, nor can the farmer obtain desired details about the failure.

Published patent application EP 0 857 418 describes a construction comprising a milking robot for automatically milking animals. The construction includes a computer with a screen, by means of which a remote service department can be informed of problems occurring in a given part of the construction. The computer can however only alert the remote service provider that a failure has occurred, but not correct a failure, though means are included for facilitating the exchange of broken parts. The system as described in this document thus requires a person to go to the stable building and solve the problem that has occurred. Further, the alarm is always sent to a computer at the service provider, that is, to a specific place where the supervision is performed.

There thus exists a need for a system by means of which a milking station can be supervised at a distance regardless of the location of the farmer, and regardless of the apparatus that the farmer has access to at a specific moment. Further, means for remote correction of occurred failures are needed.

### Summary of the invention

It is an object of the present invention to provide a method and a system for enabling a convenient and reliable way for a user, located at a distant location, to supervise and retrieve information about an automatic milking system and the animals being part of the user's herd, and thereby providing a user with monitoring means regardless of his location.

This object is achieved by a method as defined in the characterising portion of claim 1, and by a system as defined in the characterising portion of claim 11.

In accordance with the present invention, a method is provided for remote supervision of an automatic milking system being adapted to handle animals and comprising at least one milking station and computer means. The method includes the steps of creating web-documents containing information about said milking station and/or animals obtained from said computer means, establishing a connection between the milking system and a communication unit, and transmitting created web-documents to the communication unit. Thereby a user is able to supervise the automatic milking system and/or the animals even when located far away form the stable. The user may further use different kinds of apparatuses, for example a mobile phone, a computer, a PDA or a laptop, in order to e.g. check the status of a milking station. The user may thus access the automatic milking system from any communication unit, and is not restricted to use a specially adapted communication unit.

In accordance with an embodiment of the present invention the method includes the further step of having the automatic milking system receive information from a communication unit. The user is thereby enabled also to transmit information or instructions to the automatic milking system, thereby avoiding the need to go to the stable buildings in order to correct certain types of failures. The user may alternatively specify what kind of information he wants to receive. This feature provides the user with a great flexibility in that he does need to actually go to the stable building, but can correct some failures from a distance.

In accordance with another embodiment of the present invention the step of creating a web-document comprises using a web-server including a program for creating web-documents. Thereby an easy way for providing web-documents and information about a milking station and/or animals of the herd is provided, giving an easy and non-expensive way to implement the present invention.

In accordance with another embodiment of the present invention the method includes the further step of customizing said web-documents to a specific communication unit, before the transmission. This enables the user to receive only desired information, only predetermined information or receiving information that is adjusted in consideration of the capacity of the particular communication unit that the user presently has handy. A user is thereby not limited to the use of a specific, stationary computer in order to be updated about the status of a milking station, but is able to use any communication unit available.

In accordance with another embodiment of the present invention the at least one computer connected to the at least one milking station in said system receives specific instructions from a communication unit. These instructions are preferably input by a user of the communication unit by means of a user interface, such as a keyboard. The settings of the milking station can thereby be remote manipulated by the user of the communication unit. The user may from a distance manipulate and possibly correct a failure that has occurred, thereby avoiding the need to go to the stable building and correct the failure in situ.

In accordance with another embodiment of the present invention said step of establishing a connection between a communication unit and the automatic milking system is performed upon a certain event, for example an alarm. The connection may be automatically set up at an event, or it may be set up at a user's request. The connection is initiated either from the communication unit or the automatic milking system, and this enables a secure supervision of the AMS and/or the animals in that the user may always be alerted at the occurrence of certain events.

In accordance with another embodiment of the present invention said computer means comprises two or more computers handling different functions in the automatic milking system. A first computer may comprise a database including information about the herd being handled by the automatic milking system, and another computer may handle the functions of the automatic milking system. This feature provides great design flexibility when implementing the invention.

In accordance with another embodiment of the present invention the system includes a camera. The camera is preferably connected to the computer and directed so that it can take images of the milking station and/or animals. Thereby means are provided for enabling the sending of images of the at least one milking station and/or animals to a user of a communication unit. This gives a convenient way for a user to see the milking station and the animals in the stable building without actually being there. The user thus receives more information and thereby is able to make better and correct decisions about what to do when a failure has occurred, or is simply updated about the status and the state of health of the animals.

In accordance with another embodiment of the present invention the connection to the milking station is a wide band connection such as fibre, satellite, (V)LAN, radio or ADSL. These connections provide great bandwidths, enabling large amounts of information to be transmitted to a user.

The present invention also relates to such a system, whereby equivalent advantages are obtained.

### Brief description of the drawing

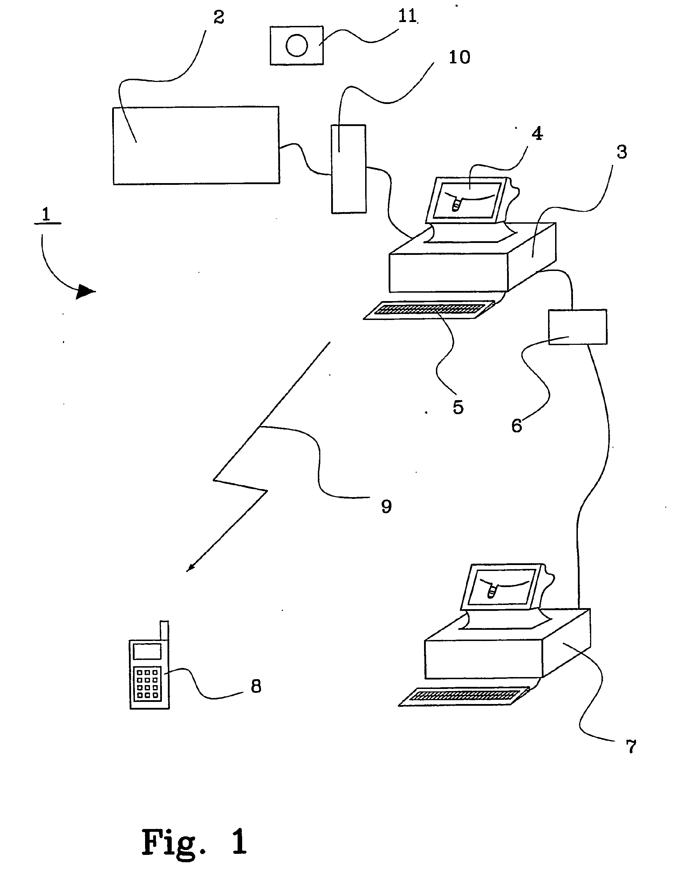

Fig. 1 shows one embodiment of the system for supervision of an automatic milking system in accordance with the present invention.

### Detailed description of preferred embodiments

Fig. 1 illustrates a system for supervision of an automatic milking system in accordance with the present invention. The automatic milking system (AMS) 1 comprises computer means for controlling the processes being performed within the AMS 1.

The computer means may, for example, be implemented as several computers handling different functions of the automatic milking system 1. For example, one computer, being part of the computer means, may control a milking station, and another may be arranged to retrieve and administrate statistics about the AMS 1. Irrespective of how the computer means is implemented, information and data may be communicated between all the different parts of it; e.g. in the case of different computers, the computers may be interconnected. The milking system 1 also includes at least one milking station 2, into which the animals enter in order to be milked. Other handling processes of the animals are also performed in the AMS 1, such as after-treatments of different kinds (e.g. teat treatments), feeding etc. The milking station 2 in turn includes, among other things, a robot arm handling teat cups, by means of which the animals are milked. The teat cups are in turn connected to a vacuum source via a milk hose for enabling the automatic milking procedure. Milk meters for measuring the amount of milk are also included, as well as other milking related equipment. The milking station 2 further includes at least one computer (not shown) and is controlled by means of it. This at least one computer controls the functions of the milking station 2, such as for example the milking pumps, the robot arms, feeding mechanisms etc. The milking station 2 may further include a screen (not shown) for enabling the displaying of information to a user, and for providing a means for the user to enter information and commands to the milking station 2. Further, at least another computer 3 is preferably connected to the milking station 2, and preferably also a screen 4 and a user interface 5, for example a keyboard. The computer 3 preferably includes a database containing information about the herd of animals being handled by the milking station 2. Information and procedures of interest for a user include for example kind of food being given to the animals, amount of food, the interval between two milking occasions of an animal (for example the minimum allowed interval between two milking occasions), milk data, milk statistics, details about specific animals etc. By means of the present invention, all these functions may be controlled by the user located at a remote location, and respectively, all this information may be retrieved by the user. The computer 3 is in turn connected to a communication enabling means, such as a modem 6, for enabling communication with an external communication unit 7, 8. In the figure, the different parts are shown as separate devices. This is however not necessary, the different parts may in an alternative embodiment of the invention be integrated into one device.

In accordance with the present invention, a device for creating HTML-documents is provided. The device can for example be a web-server 10, and in the following description a web-server is used in order to clarify and describe the present invention. It is however to be understood that the device could be another device as well, such as a WAP-server (Wireless Application Protocol). Further, other applications of SGML (standardized general markup language) than HTML (hypertext markup language) is considered to be within the scope of the present invention, such as for example vrml (virtual reality markup language), xhtml (extensible html), Java or JSP (Java Server Pages).

The web-server 10 includes a program for creating web-documents, such as a HTML-document, containing information about the status of a milking station 2 and/or the animals. Examples of such programs for creating web-documents are programs available from Apache Software Foundation. A user may retrieve any desired information that is available in the computer 3 (or some other computer, not shown) to the communication unit, 7, 8 of his or her choice. This communication unit 7, 8 may be any bidirectional communication unit such as a computer 7, a mobile phone 8, a laptop computer, a PDA (Personal Digital Assistant) or the like. The mobile phone may be an ordinary 2^{nd} generation phone (adapted for communication in e.g. GSM), a GPRS (General Packet Radio Service) phone or a 3^{rd} generation phone (adapted for communication in e.g. Universal Mobile Telecommunications System (UMTS) or Enhanced Rates for GSM Evolution (EDGE)) or any other portable, mobile phone. The communication may be enabled by means of a wireless communication link 9, as well as by any form of physical transmission means, wired or wireless. The communication is preferably conducted by means of a wide band connection such as fibre, satellite, (V)LAN (Virtual Local Area Network), radio or ADSL (asymmetrical digital subscriber line) or any other connection enabling large amount of information to be transmitted. The web-server 10 creates a web-document containing the information demanded by the user, or some predetermined information. This program thus creates a web-document, for example a HTML-document that can be viewed by means of a web-browser. The web-server 10 or the computer 3 also includes means for converting this information to different interface protocols, and the information can be adjusted in dependence of a chosen communication unit 7, 8 to which the information is to be sent. If the selected communication unit 7, 8 is restricted to receive data at a rather low maximum data rate, which limits the maximum possible size of the information to be received by it, the user may select what information should be sent. This can be done in a number of ways. The user can for example have predetermined settings in the web-server 10, determining the kind of information that should be sent to a certain kind of communication unit 7, 8, for example in dependence of the capacity of the communication unit 7, 8. The adaptation, or customizing, of the data to be transmitted may be performed in a separate step before the actual transmission to the communication unit 7, 8, or more or less simultaneously with the transmission. The customizing may be performed in different devices or in one and same device.

There is much information and procedures performed by the milking station 2 that are of interest to a user, as was mentioned above. The user may for example want to supervise which animals have been milked, how much milk they have yielded, kind of food to be given, amount of food, and how long time has elapsed since the last milking of a certain animal, when a milk tank was last emptied, the amount of milk in the milk tank and information about this may be sent to the user. The energy consumption of the automatic milking system 1, the attachment of teat cups (for example number of times the attachment has failed to be completed), supervision of milk meters (assurance of that they show the correct amount for example) and functioning of the food dosage are all examples of information and procedures of interest to the user. The milking system 1 may further include some threshold values for certain procedures, which threshold values activate an alarm when reached. For example, if the energy consumption of the milking system 1 is reaching a certain threshold, an alarm may be sent to the user, who is then able to perform a fault-localizing and thereby possibly prevent an interruption of the system. The created web-documents can be updated as often as desired, automatically or at request.

In fig. 1, the web-server 10 is shown as a separate device. However, in an alternative embodiment the web-server 10 or the features of the web-server 10 can be integrated with the computer 3 or the computer of the milking station 2, or any other computer being part of the computer means of the AMS 1. Irrespective of the location of the web-server 10, information may be retrieved from all the other computers of the system and be presented in a web-document.

The user may also send information to the computer 3 and to the web-server 10. This is an additional feature of the present invention, and decreases the need for a farmer to go to the stable building in order to correct a failure. The program creating web-documents has the capability to start other programs. The user may thus, by means of a communication unit 7, 8, input instructions, whereby the program creating web-documents affects the programs controlling the milking station 2. The user may for example reboot the system though being at a remote location, or restart certain procedures of the milking station 2 at a distance. The user may also open or close gates in the automatic milking system 1 if such needs arise, or he/she may disconnect certain parts of the system, or certain equipments can be overridden, such as for example sensors for sensing angles of certain robot arm parts or the like. The user may also get a verification that a sent instruction has indeed been carried out.

In accordance with an embodiment of the present invention, a camera 11 is installed within the automatic milking system 1, and being connected to at least one computer, for example by means of Ethernet. The camera 11 can be activated by a user, be active at all times, or be activated when a certain event occurs. The images taken by the camera 11 are sent to the web-server 10 and can thus be transferred to a user of a communication unit 7, 8 located anywhere. The user may thus see what is going on in the stable building regardless of where he or she is, and is thereby able to make correct decisions about whether to take any actions in certain situations, and what actions to take. The camera 11 is not only convenient in case of failures, but also for enabling the user to supervise the animals and/or the AMS. The camera may for example be activated when a specific animal enters the milking station 2. The user may have had certain problems related to that animal, she may for example be difficult to milk or she may kick the equipment in the milking stable. The user can thus program the camera 11 to take pictures when this animal enters the milking station 2, and can thereby supervise a milking operation and see details about the problem(s) and is thereby able to make a well-grounded decision about how to solve the problem(s). Another example of such an active supervision is that the user may program the web-server 10 to call a certain telephone number when a specific event occurs, for example when a certain animal enters the milking station 2.

Other equipment can also be placed within the system. If a temperature sensor (not shown) is included, it can be used for example to determine when an animal is in heat, and since her behaviour changes as well, also the camera 11 can be used for this purpose. The camera may alternatively be a video camera, enabling video to be shown. An example of yet an additional equipment is a microphone, enabling the user to hear sounds in the stable.

The user may also program the web-server 10 or the computer 3 to start the camera 11 whenever something that should generate an alarm occurs. When the user gets an alarm, he or she may send a request for additional information, such as data about the type of alarm. The user may then request yet further information, the information being retrieved from the computer 3 by means of the web-server 10. The web-server 10 creates a web-document containing the requested information and sends the web-document to the user requesting the information. The requested information may also include pictures taken by the camera 11. The pictures taken by the camera 11 from for example 5 seconds before an alarm has alerted to 5 seconds after the event may be saved in a computer. The user may thereby get accurate information about the event that generated the alarm, and make decisions accordingly. The user may again get a verification that a sent instruction has been carried through.

In an alternate embodiment pictures taken by the camera 11 are presented on a separate website or webpage. The user may thereby easily access said website or webpage separately in order to see pictures of the stable.

Thus, the present invention provides means for remote supervision of animals, and also means for enabling a user to remote supervise a milking station 2 by means of different kinds of communication units 7, 8 (mobile phones, laptops, PDAs etc.), the different communication units including different interfaces.

The system may also include safety measures in order to prevent an unauthorized use of the system. The user may for example be requested to input a code, i.e. a password, before access to the system is granted. Other safety measures could include multiple codes (passwords), voice recognition and encryption or any combination thereof. The use of a firewall as a safety measure is also conceivable.

It should be appreciated that the means and steps of the described system and method, respectively, could be performed in another order than the one used in the described embodiment. For example, the user may send instructions first, where after a web-document is created. Other modifications and alterations are also apparent and are to be included within the scope of the appended claims.

Thus, while the invention has been described with reference to particular embodiments, it is to be understood that the invention is not limited to the particular forms illustrated. Modifications and alterations obvious to a person skilled in the art are to be included within the scope of the appended claims.

## Claims

1. A method for remote supervision of an automatic milking system (1) being adapted to handle animals and comprising at least one milking station (2) and computer means **characterised in that** said method comprises the steps of
obtaining information about said milking station (2) and/or said animals from said computer means,
creating web-documents containing the obtained information about said milking station (2) and/or animals,
establishing a connection between the automatic milking system (1) and a mobile communication unit (8), and
transmitting created web-documents to the communication unit (8), and
customizing said web-documents to the mobile communication unit (8) before transmitting it to the mobile communication unit (8), and
that the computer means in said automatic milking system (1) receives specific instructions from the communication unit (8) input by a user of the communication unit (8) by means of a user interface, whereby settings of said milking station (2) can be remote manipulated by means of said communication unit (8).

2. The method as claimed in claim 1, **characterized in that** said step of creating a web-document comprises using a web-server (10) including a program for creating web-documents.

3. The method as claimed in claim 1 or 2, **characterized in that** the step of customizing web-documents consists in one or more of the following steps: sending only requested information, sending only predetermined information, sending information in dependence on the capacity of the communication unit (8).

4. The method as claimed in any of the preceding claims **characterized in** the further step of receiving input(s) from the communication unit (8).

5. The method as claimed in any of the preceding claims **characterized in that** the establishment of a connection between the automatic milking system (1) and the communication unit (8) is initiated either from the communication unit (8) or the automatic milking system (1).

6. The method as claimed in claim 5, **characterised in that** the connection between the automatic milking system (1) and the communication unit (8) is established upon the occurrence of a certain event.

7. The method as claimed in any of the preceding claims **characterized in that** said mobile communication unit (8) is selected to be any of the group: laptop computer, PDA or mobile telephone (8).

8. The method as claimed in any of the preceding claims, **characterized in that** said computer means comprises two or more computers handling different functions in the automatic milking system (1).

9. The method as claimed in claim 8, **characterized in that** a first computer comprises a database including information about the herd being handled by the automatic milking system (1), and another computer handles the functions of the automatic milking system (1).

10. The method as claimed in any of the preceding claims, **characterized in that** said automatic milking system (1) includes at least one camera (11) for enabling the sending of images of the at least one milking station (2) and/or animals to a communication unit (8).

11. A system for remote supervision of an automatic milking system (1) being adapted to handle animals and comprising at least one milking station (2) and computer means **characterised in that** the system includes means (10) for creating web-documents containing information about said milking station (2) and/or said animals obtained from said computer means, means for establishing a connection between the automatic milking system (1) and a mobile communication unit (8), and means (10, 6) for transmitting created web-documents to a communication unit (8), and means for customizing said web-documents to the mobile communication unit (8) before transmitting a created web-document to the mobile communication unit (8), and the computer means in said automatic milking system (1) receives specific instructions from the communication unit (8) input by a user of the communication unit (8) by means of a user interface, whereby settings of said milking station (2) can be remote manipulated by means of said communication unit (8)..

12. The system as claimed in claim 11, **characterized in that** said means (10) for creating a web-document comprises a web-server including a program for creating web-documents.

13. The system as claimed in claim 12, **characterized in that** the means for customizing comprises means for performing one or more of the following: sending only requested information, sending only predetermined information, sending information in dependence on the capacity of the communication unit (8).

14. The system as claimed in any of claims 11-13, **characterized in that** said mobile communication unit (8) is any of the group: laptop computer, PDA or mobile telephone (8).

15. The system as claimed in any of claims 11-14, **characterized in that** said computer means comprises two or more computers handling different functions in the automatic milking system (1) .

16. The system as claimed in claim 15, **characterized in that** a first computer comprises a database including information about the herd being handled by the automatic milking system (1), and another computer handles the functions of the automatic milking system (1).

17. The system as claimed in any of claims 11-16, **characterized in that** said system includes a camera (11) for enabling the sending of images of the at least one milking station (2) and/or animals to a communication unit (8).

18. The system as claimed in any claims 11-17, **characterized in that** the system includes means for establishing the connection between the automatic milking system (1) and the communication unit (8) upon a certain event.

19. The system as claimed in claim 18 **characterized in that** the establishment of a connection is initiated either from the communication unit (8) or the automatic milking system (1).

20. The system as claimed in any of claims 18-19, **characterized in that** the connection between a communication unit (8) and the milking station (2) is a wide band connection such as fibre, satellite, (V)LAN, radio or ADSL.

21. The system as claimed in any of claims 11-20, **characterized in that** the system includes means for receiving input being sent from the communication unit (8).

## Patentansprüche

1. Verfahren zur Fernüberwachung eines automatischen Melksystems (1), das zur Verwaltung von Tieren dient und mindestens eine Melkstation (2) sowie eine Computereinrichtung umfaßt, **dadurch gekennzeichnet, daß** das Verfahren die folgenden Schritte umfaßt:
Beschaffen von Informationen über die Melkstation (2) und/oder die Tiere von der Computereinrichtung,
Erzeugen von Web-Dokumenten, die die beschafften Informationen über die Melkstation (2) und/ oder die Tiere enthalten,
Aufbauen einer Verbindung zwischen dem automatischen Melksystem (1) und einer mobilen Kommunikationseinheit (8), und
Übermitteln der erzeugten Web-Dokumente an die Kommunikationseinheit (8), und
Anpassen der Web-Dokumente an die mobile Kommunikationseinheit (8) vor deren Übertragung an die mobile Kommunikationseinheit (8), und
daß die Computereinrichtung im automatischen Melksystem (1) spezifische Anweisungen von der Kommunikationseinheit (8) empfängt, die von einem Benutzer der Kommunikationseinheit (8) mittels einer Benutzerschnittstelle eingegeben werden, wobei die Einstellungen der Melkstation (2) mittels der Kommunikationseinheit (8) ferngesteuert werden können.

2. Verfahren nach Anspruch 1, **dadurch gekennzeichnet, daß** der Schritt des Erzeugens eines Web-Dokumentes die Verwendung eines Web-Servers (10) umfaßt, der ein Programm zum Erzeugen von Web-Dokumenten enthält.

3. Verfahren nach Anspruch 1 oder 2, **dadurch gekennzeichnet daß** der Schritt des Anpassens der Web-Dokumente in einem oder mehreren der folgenden Schritte besteht: Senden nur von angeforderten Informationen, Senden nur von vorbestimmten Informationen, Senden von Informationen in Abhängigkeit von der Kapazität der Kommunikationseinheit (8).

4. Verfahren nach einem der vorangegangenen Ansprüche, **gekennzeichnet durch** den weiteren Schritt des Empfangens von Input(s) von der Kommunikationseinheit (8).

5. Verfahren nach einem der vorangegangenen Ansprüche, **dadurch gekennzeichnet, daß** der Aufbau einer Verbindung zwischen dem automatischen Melksystem (1) und der Kommunikationseinheit (8) entweder von der Kommunikationseinheit (8) oder vom automatischen Melksystem (1) initiiert wird.

6. Verfahren nach Anspruch 5, **dadurch gekennzeichnet, daß** die Verbindung zwischen dem automatischen Melksystem (1) und der Kommunikationseinheit (8) beim Auftreten eines bestimmten Ereignisses aufgebaut wird.

7. Verfahren nach einem der vorangegangenen Ansprüche, **dadurch gekennzeichnet, daß** die mobile Kommunikationseinheit (8) aus der folgenden Gruppe ausgewählt ist: Laptop-Computer, PDA oder Mobiltelefon (8).

8. Verfahren nach einem der vorangegangenen Ansprüche, **dadurch gekennzeichnet daß** die Computereinrichtung zwei oder mehrere Computer umfaßt, die unterschiedliche Funktionen im automatischen Melksystem (1) verwalten.

9. Verfahren nach Anspruch 8, **dadurch gekennzeichnet, daß** ein erster Computer eine Datenbank umfaßt, die Informationen über die vom automatischen Melksystem (1) verwaltete Herde enthält, und ein anderer Computer die Funktionen des automatischen Melksystems (1) verwaltet.

10. Verfahren nach einem der vorangegangenen Ansprüche, **dadurch gekennzeichnet, daß** das automatische Melksystem (1) mindestens eine Kamera (11) umfaßt, die das Senden von Bildern mindestens einer Melkstation (2) und / oder von Tieren an eine Kommunikationseinheit (8) ermöglicht.

11. System zur Fernüberwachung eines automatischen Melksystems (1), das zur Verwaltung von Tieren dient und mindestens eine Melkstation (2) sowie eine Computereinrichtung umfaßt, **dadurch gekennzeichnet, daß** das System eine Einrichtung (10) zum Erzeugen von Web-Dokumenten umfaßt die Informationen über die Melkstation (2) und/oder die Tiere enthalten, die von der Computereinrichtung beschafft werden, sowie eine Einrichtung zum Aufbauen einer Verbindung zwischen dem automatischen Melksystem (1) und einer mobilen Kommunikationseinheit (8), und eine Einrichtung (10, 6) zum Übermitteln der erzeugten Web-Dokumente an eine Kommunikationseinheit (8), und eine Einrichtung zum Anpassen der Web-Dokumente an die mobile Kommunikationseinheit (8) vor der Übertragung eines erzeugten Web-Dokumentes an die mobile Kommunikationseinheit (8), wobei die Computereinrichtung im automatischen Melksystem (1) spezifische Anweisungen von der Kommunikationseinheit (8) empfängt, die von einem Benutzer der Kommunikationseinheit (8) mittels einer Benutzerschnittstelle eingegeben werden, wobei die Einstellungen der Melkstation (2) mittels der Kommunikationseinheit (8) ferngesteuert werden können.

12. System nach Anspruch 11, **dadurch gekennzeichnet, daß** die Einrichtung (10) zum Erzeugen eines Web-Dokumentes einen Web-Server umfaßt, der ein Programm zum Erzeugen von Web-Doktunenten enthält.

13. System nach Anspruch 12, **dadurch gekennzeichnet, daß** die Einrichtung zum Anpassen eine Einrichtung zum Durchführen eines oder mehrerer der folgenden Schritte umfaßt: Senden nur von angeforderten Informationen, Senden nur von vorbestimmten Informationen, Senden von Informationen in Abhängigkeit von der Kapazität der Kommunikationseinheit (8).

14. System nach einem der Ansprüche 11-13, **dadurch gekennzeichnet, daß** die mobile Kommunikationseinheit (8) aus der folgenden Gruppe ausgewählt ist: Laptop-Computer, PDA oder Mobiltelefon (8).

15. System nach einem der Ansprüche 11-14, **dadurch gekennzeichnet daß** die Computereinrichtung zwei oder mehrere Computer umfaßt, die unterschiedliche Funktionen im automatischen Melksystem (1) verwalten.

16. System nach Anspruch 15, **dadurch gekennzeichnet, daß** ein erster Computer eine Datenbank umfaßt, die Informationen über die vom automatischen Melksystem (1) verwaltete Herde enthält, und ein anderer Computer die Funktionen des automatischen Melksystems (1) verwaltet.

17. System nach einem der Ansprüche 11-16, **dadurch gekennzeichnet, daß** das System eine Kamera (11) enthält die das Senden von Bildern mindestens einer Melkstation (2) und/oder von Tieren an eine Kommunikationseinheit (8) ermöglicht.

18. System nach einem der Ansprüche 11-17, **dadurch gekennzeichnet, daß** das System eine Einrichtung zum Aufbau der Verbindung zwischen dem automatischen Melksystem (1) und der Kommunikationseinheit (8) bei einem bestimmten Ereignis umfaßt.

19. System nach Anspruch 18, **dadurch gekennzeichnet, daß** der Aufbau einer Verbindung entweder von der Kommunikationseinheit (8) oder vom automatischen Melksystem (1) initiiert wird.

20. System nach einem der Ansprüche 18-19, **dadurch gekennzeichnet, daß** die Verbindung zwischen einer Kommunikationseinheit (8) und der Melkstation (2) eine Breitbandverbindung wie etwa Kabel, Satellit, (V)LAN, Radio oder ADSL ist.

21. System nach einem der Ansprüche 11-20, **dadurch gekennzeichnet, daß** das System eine Einrichtung zum Empfangen einer Eingabe umfaßt, die von der Kommunikationseinheit (8) gesendet wird.

## Revendications

1. Procédé de supervision à distance d'un système de traite automatique (1) adapté pour traiter des animaux et comprenant au moins une station de traite (2) et un moyen formant ordinateur **caractérisé en ce que** ledit procédé comprend les étapes consistant à :
obtenir dudit moyen formant ordinateur de l'information sur ladite station de traite (2) et/ou lesdits animaux,
créer des documents Web contenant l'information obtenue sur ladite station de traite (2) et/ou lesdits animaux,
établir une connexion entre le système de traite automatique (1) et une unité de communication mobile (8), et
transmettre les documents Web créés à l'unité de communication (8), et
personnaliser lesdits documents Web pour l'unité de communication mobile (8) avant de les transmettre à l'unité de communication mobile (8), et
que le moyen formant ordinateur dans ledit système de traite automatique (1) reçoit des instructions spécifiques de l'unité de communication (8) saisies par un utilisateur de l'unité de communication (8) l'aide d'une interface utilisateur, moyennant quoi les réglages de ladite station de traite (2) peuvent être manipulés à distance au moyen de ladite unité de communication (8),

2. Procédé selon la revendication 1, **caractérisé en ce que** ladite étape de création d'un document Web comprend l'utilisation d'un serveur Web (10) comportant un programme pour créer des documents Web,

3. Procédé selon la revendication 1 ou 2, **caractérisé en ce que** l'étape de personnalisation des documents Web consiste en l'une ou plusieurs des étapes suivantes : envoyer uniquement de l'information demandée, envoyer uniquement de l'information prédéterminée, envoyer de l'information en fonction de la capacité de l'unité de communication (8).

4. Procédé selon l'une quelconque des revendications précédentes, **caractérisé par** l'étape supplémentaire consistant à recevoir une ou des entrée(s) de l'unité de communication (8).

5. Procédé selon l'une quelconque des revendications précédentes, **caractérisé en ce que** l'établissement d'une connexion entre le système de traite automatique (1) et l'unité de communication (8) est amorcé soit par l'unité de communication (8), soit par le système de traite automatique (1).

6. Procédé selon la revendication 5, **caractérisé en ce que** la connexion entre le système de traite automatique (1) et l'unité de communication (8) est établie lorsqu'il se produit un certain événement.

7. Procédé selon l'une quelconque des revendications précédentes, **caractérisé en ce que** ladite unité de communication mobile (8) est choisie dans l'ensemble comprenant : un ordinateur portable, un assistant numérique personnel et un téléphone portable (8).

8. Procédé selon l'une quelconque des revendications précédentes, **caractérisé en ce que** ledit moyen formant ordinateur comprend deux ordinateurs, ou plus, gérant des fonctions différentes dans le système de traite automatique (1).

9. Procédé selon la revendication 8, **caractérisé en ce qu'**un premier ordinateur comprend une base de données comprenant de l'information sur le troupeau pris en charge par le système de traite automatique (1), et un autre ordinateur gère les fonctions du système de traite automatique (1).

10. Procédé selon l'une quelconque des revendications précédentes, **caractérisé en ce que** ledit système de traite automatique (1) comporte au moins une caméra (11) permettant l'envoi d'images de ladite au moins une station de traite (2) et/ou d'animaux à une unité de communication (8).

11. Système de supervision à distance d'un système de traite automatique (1) adapté pour traiter des animaux et comprenant au moins une station de traite (2) et un moyen formant ordinateur **caractérisé en ce que** le système comprend un moyen (10) permettant de créer des documents Web contenant de l'information sur ladite station de traite (2) et/ou lesdits animaux obtenue dudit moyen formant ordinateur, un moyen pour établir une connexion entre le système de traite automatique (1) et une unité de communication mobile (8), et un moyen (10, 6) pour transmettre les documents Web créés à une unité de communication (8), et un moyen pour personnaliser lesdits documents Web pour l'unité de communication mobile (8) avant de transmettre un document Web créé à l'unité de communication mobile (8), et le moyen formant ordinateur dans ledit système de traite automatique (1) reçoit des instructions spécifiques de l'unité de communication (8) saisies par un utilisateur de l'unité de communication (8) à l'aide d'une interface utilisateur, moyennant quoi les réglages de ladite station de traite (2) peuvent être manipulés à distance au moyen de ladite unité de communication (8).

12. Système selon la revendication 11, **caractérisé en ce que** ledit moyen (10) pour créer un document Web comprend un serveur Web comportant un programme pour créer des documents Web.

13. Système selon la revendication 12, **caractérisé en ce que** le moyen de personnalisation comprend un moyen permettant d'exécuter une ou plusieurs des opérations suivantes : envoyer uniquement de l'information demandée, envoyer uniquement de l'information prédéterminée, envoyer de l'information en fonction de la capacité de l'unité de communication (8).

14. Système selon l'une quelconque des revendications 11 à 13, **caractérisé en ce que** ladite unité de communication mobile (8) est choisie dans l'ensemble comprenant : un ordinateur portable, un assistant numérique personnel et un téléphone portable (8).

15. Système selon l'une quelconque des revendications 11 à 14, **caractérisé en ce que** ledit moyen formant ordinateur comprend deux ordinateurs, ou plus, gérant des fonctions différentes dans le système de traite automatique (1).

16. Système selon la revendication 15, **caractérisé en ce qu'**un premier ordinateur comprend une base de données comprenant de l'information sur le troupeau pris en charge par le système de traite automatique (1), et un autre ordinateur gère les fonctions du système de traite automatique (1).

17. Système selon l'une quelconque des revendications 11 à 16, **caractérisé en ce que** ledit système comprend une caméra (11) permettant l'envoi d'images de ladite au moins une station de traite (2) et/ou d'animaux à une unité de communication (8).

18. Système selon l'une quelconque des revendications 11 à 17, **caractérisé en ce que** le système comprend un moyen pour établir la connexion entre le système de traite automatique (1) et l'unité de communication (8) lorsqu'il se produit un certain évènement.

19. Système selon la revendication 18, **caractérisé en ce que** l'établissement d'une connexion est amorcé soit par l'unité de communication (8), soit par le système de traite automatique (1).

20. Système selon l'une quelconque des revendications 18 à 19, **caractérisé en ce que** la connexion entre une unité de communication (8) et la station de traite (2) est une connexion à large bande, comme la fibre, le satellite, le réseau (V)LAN, la radio ou l'ADSL.

21. Système selon l'une quelconque des revendications 11 à 20, **caractérisé en ce que** le système comprend un moyen pour recevoir des entrées envoyées par l'unité de communication (8).
